# EUROPÄISCHE PATENTSCHRIFT

(11) **EP 1 461 852 B1**
(45) Veröffentlichungstag und Bekanntmachung des Hinweises auf die Patenterteilung: **04.07.2012**
(21) Anmeldenummer: 02791775.6
(22) Anmeldetag: 05.12.2002
(51) Int. Cl.: H01T 2/02

(54) **MEHRPOLIGES ÜBERSPANNUNGSSCHUTZSYSTEM UND VERFAHREN ZUM SICHEREN BETRIEB EINES MEHRPOLIGEN ÜBERSPANNUNGSSCHUTZSYSTEMS**
MULTIPOLE OVERVOLTAGE PROTECTION SYSTEM AND METHOD FOR THE RELIABLE OPERATION OF A MULTIPOLE OVERVOLTAGE PROTECTION SYSTEM
SYSTEME MULTIPOLAIRE DE PROTECTION CONTRE LES SURTENSIONS ET PROCEDE DE FONCTIONNEMENT FIABLE D'UN SYSTEME MULTIPOLAIRE DE PROTECTION CONTRE LES SURTENSIONS

(30) Priorität: 31.12.2001 DE 10164232
(43) Veröffentlichungstag der Anmeldung: 29.09.2004
(73) Patentinhaber: PHOENIX CONTACT GmbH & Co. KG, 32825 Blomberg (DE)
(72) Erfinder: DURTH, Rainer, 32805 Horn-Bad Meinberg (DE); WETTER, Martin, 32760 Detmold (DE); SCHEIBE, Klaus, 24111 Kiel (DE)
(86) Internationale Anmeldenummer: PCT/EP2002/013768
(87) Internationale Veröffentlichungsnummer: WO 2003/056670

(56) Entgegenhaltungen:
- WO-A-99/67865
- DE-C- 295 866
- DE-C- 404 870
- GB-A- 2 179 214

## Beschreibung

Die Erfindung betrifft ein mehrpoliges Überspannungsschutzsystem für ein mehrphasiges Stromversorgungsnetz, insbesondere ein Niederspannungsnetz, mit mindestens zwei Überspannungsschutzelementen, wobei in jedem Leitungszweig des Stromversorgungsnetzes ein Überspannungsschutzelement angeordnet ist, wobei die einzelnen Überspannungsschutzelemente eine erste Elektrode, eine zweite Elektrode und eine zwischen den beiden Elektroden existente bzw. wirksame Luft-Durchschlag-Funkenstrecke aufweisen, wobei alle Überspannungsschutzelemente in einem gemeinsamen Gehäuse angeordnet sind, und wobei die einzelnen Überspannungsschutzelemente derart miteinander gekoppelt sind, dass beim Zünden eines Überspannungsschutzelements alle anderen Überspannungsschutzelemente auch gezündet werden.

Elektrische, insbesondere aber elektronische Mess-, Steuer-, Regel- und Schaltkreise, vor allem auch Telekommunikationseinchtungen und -anlagen, sind empfindlich gegen transiente Überspannungen, wie sie insbesondere durch atmosphärische Entladungen, aber auch durch Schalthandlungen oder Kurzschlüsse in Energieversorgungsnetzen auftreten können. Diese Empfindlichkeit hat in dem Maße zugenommen, in dem elektronische Bauelemente, insbesondere Transistoren und Thyristoren, verwendet werden; vor allem sind zunehmend eingesetzte integrierte Schaltkreise in starkem Maße durch transiente Überspannungen gefährdet.

Elektrische Stromkreise arbeiten mit der für sie spezifizierten Spannung, der Nennspannung, normalerweise störungsfrei. Das gilt dann nicht, wenn Überspannungen auftreten. Als Überspannungen gelten alle Spannungen, die oberhalb der oberen Toleranzgrenze der Nennspannung liegen. Hierzu zählen vor allem auch die transienten Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektrische Stromkreise eingekoppelt werden können. Um nun elektrische oder elektronische Stromkreise, insbesondere elektronische Mess-, Steuer-, Regel- und Schaltkreise, vor allem auch Telekommunikationseinrichtungen und -anlagen, wo auch immer sie eingesetzt sind, gegen transiente Überspannungen zu schützen, sind Überspannungsschutzelemente entwickelt worden und seit mehr als zwanzig Jahren bekannt.

Wesentlicher Bestandteil von Überspannungsschutzelementen der hier in Rede stehenden Art, die häufig auch als Blitzstromableiter bezeichnet werden, ist mindestens eine Funkenstrecke, die bei einer bestimmten Überspannung, der Ansprechspannung, anspricht und damit verhindert, dass in dem durch ein Überspannungsschutzelement geschützten Stromkreis Überspannungen auftreten, die größer als die Ansprechspannung der Funkenstrecke sind.

Die Funkenstrecken der eingangs genannten Überspannungsschutzelemente sind meist als Luft-Durchschlag-Funkenstrecken ausgebildet, d. h. sie weisen zwei Elektroden auf, zwischen denen die Luft-Durchschlag-Funkenstrecke existent bzw. wirksam ist. Mit Luft-Durchschlag-Funkenstrecke ist ganz allgemein eine Durchschlag-Funkenstrecke gemeint; umfasst sein soll damit also auch eine Durchschlag-Funkenstrecke, bei der nicht Luft, sondern ein anderes Gas zwischen den Elektroden vorhanden ist. Neben Überspannungsschutzelementen mit einer Luft-Durchschlag-Funkensixecke gibt es Überspannungsschutzelemente mit einer Luft-Überschlag-Funkenstrecke, bei denen beim Ansprechen eine Gleitentladung auftritt.

Überspannungsschutzelemente mit einer Luft-Durchschlag-Funkenstrecke haben gegenüber Überspannungsschutzelementen mit einer Luft-Überschlag-Funkenstrecke den Vorteil einer höheren Stoßstromtragfähigkeit, jedoch den Nachteil einer höheren - und auch nicht sonderlich konstanten - Ansprechspannung. Deshalb sind bereits verschiedene Überspannungsschutzelementen mit einer Luft-Durchschlag-Funkenstrecke vorgeschlagen worden, die in Bezug auf die Ansprechspannung verbessert worden sind. Dabei sind im Bereich der Elektroden bzw. der zwischen den Elektroden wirksamen Luft-Durchschlag-Funkenstrecke in verschiedener Weise Zündhilfen realisiert worden, z. B. dergestalt, dass zwischen den Elektroden mindestens eine Gleitentladung auslösende Zündhilfe vorgesehen worden ist, die zumindest teilweise in die Luft-Durchschlag-Funkenstrecke hineinragt, stegartig ausgeführt ist und aus Kunststoff besteht (vgl. z. B. die deutschen Offenlegungsschziften 41 41 681 oder 44 02 615).

Die bei den bekannten Überspannungsschutzelementen vorgesehenen, zuvor angesprochenen Zündhilfen können gleichsam als "passive Zündhilfe" bezeichnet werden, "passive Zündhilfen" deshalb, weil sie nicht selbst "aktiv" ansprechen, sondern nur durch eine Überspannung ansprechen, die an den Hauptelektroden auftritt.

Aus der deutschen Offenlegungsschrift 198 03 636 ist ebenfalls ein Überspannungsschutzelement mit zwei Elektroden, mit einer zwischen den beiden Elektroden wirksamen Luft-Dutchschlag-Funkenstrecke und einer Zündhilfe bekannt. Bei diesem bekannten Überspannungsschutzelement ist die Zündhilfe, im Gegensatz zu den zuvor beschriebenen, eine Gleitentladung auslösenden Zündhilfen, als aktive Zündhilfe" ausgebildet, nämlich dadurch, dass neben den beiden Elektroden - dort als Hauptelektroden bezeichnet - noch zwei Zündelektroden vorgesehen sind. Diese beiden Zündelektroden bilden eine zweite, als Zündfunkenstrecke dienende Luft-Durchschlag-Funkenstrecke. Bei diesem bekannten Überspannungsschutzelemente gehört zu der Zündhilfe außer der Zündfunkenstrecke noch ein Zündkreis mit einem Zündschaltelement. Bei Anliegen einer Überspannung an der bekanntem Überspannungsschutzelemente sorgt der Zündkreis mit dem Zündschaltelement für ein Ansprechen der Zündfunkenstrecke. Die Zündfunkenstrecke bzw. die beiden Zündelektroden sind in Bezug auf die beiden Hauptelektroden derart angeordnet, dass dadurch, dass die Zündfunkenstrecke angesprochen hat, die Luft-Durchschlag-Funkenstrecke zwischen den beiden Hauptelektroden, Hauptfunkenstrecke genannt, anspricht. Das Ansprechen der Zündfunkenstrecke führt zu einer Ionisierung der in der Luft-Durchschlag-Funkenstrecke vorhandenen Luft, so dass - schlagartig - nach Ansprechen der Zündfunkenstrecke dann auch die Luft-Durchschlag-Funkenstrecke zwischen den beiden Hauptelektroden, also die Hauptfunkenstrecke, anspricht.

Bei den bekannten, zuvor beschriebenen Ausführungsformen von Überspannungsschutzelementen mit Zündhilfen führen die Zündhilfen zu einer verbesserten, nämlich niedrigeren und konstanteren Ansprechspannung.

Die DE 40 48 70 C offenbart eine Anordnung von zwei Sicherungsröhren zur Entladung einer Doppelleitung, wobei in jeder Sicherongsröhre zwei Elektroden vorhanden sind, von denen eine mit der Leitung und die andere mit der Erde verbunden ist. Darüber hinaus ist in den beiden Sicherungsröhren jeweils noch eine Hilfselektrode angeordnet, wobei die beiden Hilfselektroden miteinander verbunden sind.

Aus der DE 29 58 66 C ist eine Schaltung zur Erniedrigung von Durchschlagspannungen von Entladungsröhren bekannt. Dabei ist in einer Entladungsröhre neben der mit der zu schützenden Leitung verbundenen Elektrode und einer mit Masse verbundenen Kathode eine den Ableitungsstrom nicht führende Hilfselektrode angeordnet, die mit einer Spannungsquelle verbunden ist, so dass die Hilfselektrode dauerhaft eine Hilfsionisation in der Entladungsröhre hervorruft. Durch diese dauerhafte Hilfsionisation ist die Durchbruchspannung zwischen der mit der zu sichernden Leitung verbundenen Hauptelektrode und der Kathode deutlich verringert. Bei einem Ausführungsbeispiel sind drei Elektroden, die jeweils mit einer zu sichernden Leitung verbunden sind, innerhalb der Entladungsröhre angeordnet. Auch hierbei erfolgt das Zünden zwischen den Hauptelektroden und der Kathode dadurch bei einer bestimmten, geringeren Überspannung, dass durch die Hilfselektrode dauerhaft eine Hilfsionisation in der Elektrodenröhre erfolgt, wodurch die Durchschlagspannungen alle verringert sind.

Zum Überspannungsschutz der zentralen Stromversorgung in Niederspannungsnetzen sind drei- bzw, vierpolige Überspannungsschutzgeräte bekannt, in denen einzelne Überspannungsschutzelemente zu einem Überspannungsschutzsystem zusammengeschaltet und in einem gemeinsamen Gehäuse angeordnet sind. Die einzelnen Überspannungsschutzelemente schützen dabei jeweils nur einen einzigen Leitungszweig des Stromversorgungsnetzes. Dabei wird je nach der Beschaltung des Überspannungsschutzgeräts der angegebene Schutzpegel nur zwischen den aktiven Phasenleitern (L1, L2, L3) und dem Neutralleiter (N) bzw. zwischen dem Neutralleiter (N) und der Erde (PE) oder zwischen den aktiven Phasenleitern (L1, L2, L3) und der Erde (PE) bzw. zwischen dem Neutralleiter (N) und der Erde (PE) gewährleistet. Insbesondere zwischen den einzelnen aktiven Phasenleitern (L1, L2, L3) ist dagegen der Sehutzpegel nicht sichergestellt.

Nun kann es jedoch vorkommen, dass es aufgrund induktiver oder kapazitiver Einkopplung (Übersprechen) beim Auftreten einer Überspannung in nur einem Leitungszweig in einem anderen Leitungszweig zu einer - wenn auch geringeren - Überspannung kommt, die jedoch nicht zu einem Schalten des Überspannungsschutzelements dieses Leitungszweiges führt. Darüber hinaus kann es auch bei eigentlich gleich ausgelegten Überspannungsschutzelementen und gleich ausgelegten Leitungszweigen im Überspannungsfall zu einer ungleichmäßigen Aufteilung des Summenstoßstromes kommen, insbesondere dann, wenn die einzelnen Überspannungsschutzelemente zeitversetzt schalten oder einzelne Überspannungsschutzelemente überhaupt nicht schalten. In der Praxis werden nun mehrpolige Überspannungsschutzgeräte mit einem Ableitvermögen bis zu einer bestimmten Größe des Summenstoßstromes angeboten, bei denen die einzelnen Überspannungsschutzelemente jedoch nur einen entsprechenden Anteil (1/3 bzw, 1/4 bei Drei- bzw. Vier Leitungszweigen) des angegebenen Summenstoßstromes ableiten können. Kommt es bei diesen mehrpoligen Überspannungsschutzgeräten nun zu einer unsymmetrischen Stromaufteilung so kann dies zu einer Überlastung einzelner Überspannungsschutzelemente führen.

Der vorliegenden Erfindung liegt somit die Aufgabe zugrunde, ein mehrpoliges Überspannungsschutzsystem zur Verfügung zu stellen, bei dem der gewünschte Schutzpegel zwischen allen Leitungszweigen sichergestellt ist, das dennoch konstruktiv einfach und damit kostengünstig hergestellt werden kann.

Das erfindungsgemäße mehrpolige Überspannungsschutzsystem, bei dem diese Aufgabe gelöst ist, ist dadurch gekennzeichnet, dass die Elektroden der einzelnen Überspannungsschutzelemente so zueinander angeordnet sind, dass beim Zünden der Luft-Durchschlag-Funkenstrecke eines Überspannungsschutzelements durch das dann vorhandene Plasma die Luft-Durchschlag-Funkenstrecken der anderen Überspannungsschutzelemente ebenfalls zünden, und dass die einzelnen Elektroden koaxial zueinander angeordnet sind.

Tritt an dem erfindungsgemäßen mehrpoligen Überspannungsschutzsystem in einem Leitungszweig eine Überspannung auf, die größer als die Ansprechspannung ist, so führt dies zum Zünden des in diesem Leitungszweig angeordneten Überspannungsschutzelements. Dadurch, dass nun die einzelnen Überspannungsschutzelemente miteinander gekoppelt sind, nämlich die Elektroden der einzelnen Überspannungsschutzelemente so zueinander angeordnet sind, dass beim Zünden der Luft-Durchschlag-Funkenstrecke eines Überspannungsschutzelements durch das dann vorhandenes Plasma die Luft-Durchschlag-Funkenstrecken der anderen Überspannungsschutzelemente ebenfalls zünden, erfolgt dann automatisch auch ein Zünden der Überspannungsschutzelemente in den anderen Leitungszweigen. Dadurch wird der gewünschte Schutzpegel zwischen allen Leitungszweigen sichergestellt und eine symmetrische Aufteilung des Summenstoßstroms gewährleistet.

Wenn zuvor ausgeführt worden ist, dass die einzelnen Überspannungsschutzelemente eine erste Elektrode und eine zweite Elektrode aufweisen, so ist dies lediglich funktional gemeint, müssen nämlich körperlich nicht für jedes Überspannungsschutzelement eine erste Elektrode und eine eigene zweite Elektrode vorhanden sein, sondern kann vielmehr eine Elektrode vorgesehen sein, die für mehrere Überspannungsschutzelemente oder für alle Überspannungsschutzelemente als zweite Elektrode fungiert.

Gemäß einer Ausgestaltung des erfindungsgemäßen mehrpoligen Überspannungsschutzsystems ist eine zentrale Zündhilfe vorgesehen, mit der alle Überspannungsschutzelemente elektrisch verbunden sind. Diese Ausgestaltung hat den Vorteil, daß nur wenige Bauteile benötigt werden, so daß das Überspannungsschutzsystem zum einen kostengünstiger, zum anderen mit geringeren Abmessungen hergestellt werden kann. Ist die zentrale Zündhilfe wiederum als "aktive Zündhilfe" ausgebildet, so weist sie vorzugsweise eine zentrale Zündelektrode und eine mit der zentralen Zündelektrode verbundene zentrale Zündschaltung auf.

Ein Verfahren zum sicheren Betrieb eines mehrpoligen Überspannungsschutzsystems in einen mehrphasigen Stromversorgungsnetz, insbesondere in einem Niederspannungsnetz, bei dem das Überspannungsschutzsystem mindestens zwei Überspannungsschutzelemente aufweist, die jeweils in einem Leitungszweig des Stromversorgungsnetzes angeordnet sind, kann dadurch ausgebildet sein, dass beim Zünden eines einzelnen Überspannnungsschutzelements alle anderen Überspannungsschutzelemente auch gezündet werden.

Bei einer ersten Ausgestaltung des Verfahrens, bei dem die einzelnen Überspannungsschutzelemente als Luft-Durchschlag-Funkenstrecken ausgebildet und in einem gemeinsamen Gehäuse angeordnet sind, erfolgt durch das beim Zünden einer Luft-Durchschlag-Funkenstrecke eines Überspannungsschutzelements entstehende Plasma automatisch ein Zünden der Luft-Durchschlag-Funkenstrecken der übrigen Überspannungsschutzelemente.

Im einzelnen gibt es nun eine Vielzahl von Möglichkeiten, dass erfindungsgemäße mehrpolige Überspannungsschutzsystem auszugestalten und weiterzubilden. Dazu wird verwiesen einerseits auf die dem Patentanspruch 1 nach geordneten Patentansprüche, andererseits auf die nachfolgende Beschreibung bevorzugter Ausführungsbeispiele in Verbindung mit der Zeichnung. In der Zeichnung zeigen
- Fig. 1: zwei vereinfachte Schaltbilder eines im Stand der Technik bekannten mehrpoligen Überspannungsschutzsystems bei zwei unterschiedlichen Netzformen,
- Fig. 2: ein vereinfachtes Schaltbild eines Ausführungsbeispiels eines erfindungsgemäßen mehrpoligen Überspannungsschutzsystems und
- Fig. 3: ein Ausführungsbeispiel eines erfindungsgemäßen mehrpoligen Überspannnungsschutzgeräts, entsprechend dem Schaltbild gemäß Fig. 2, teilweise im Schnitt.

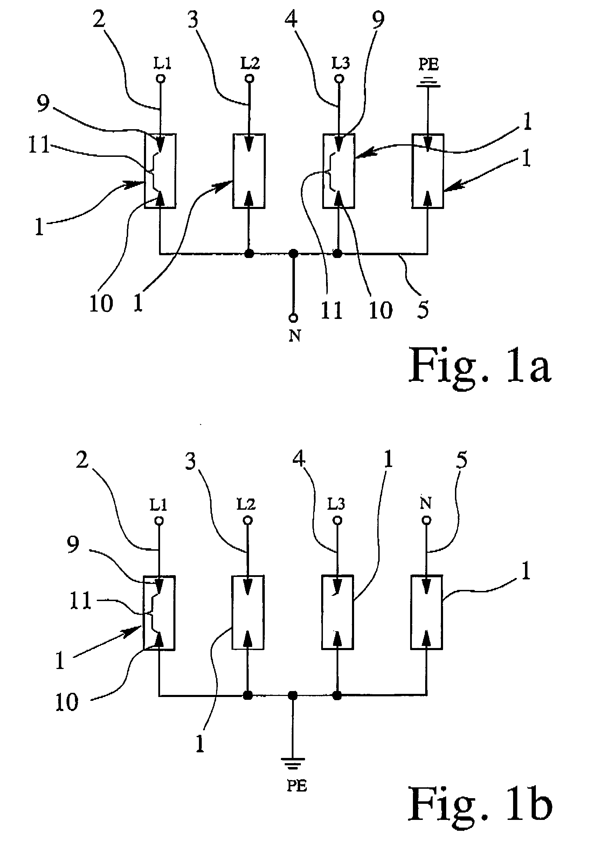

Die Fig. 1 a und 1 b zeigen je ein vereinfachtes Schaltbild eines aus dem Stand der Technik bekannten mehrpoligen Überspannungsschutzsystems für ein dreiphasiges Stromversorgungsnetz mit insgesamt vier Überspannungsschutzelementen 1, wobei das Schaltbild gemäß Fig. 1 a eine "3 + 1-Schaltung" darstellt, während Fig. 1b eine "4 + 0-Schaltung" symbolisiert.

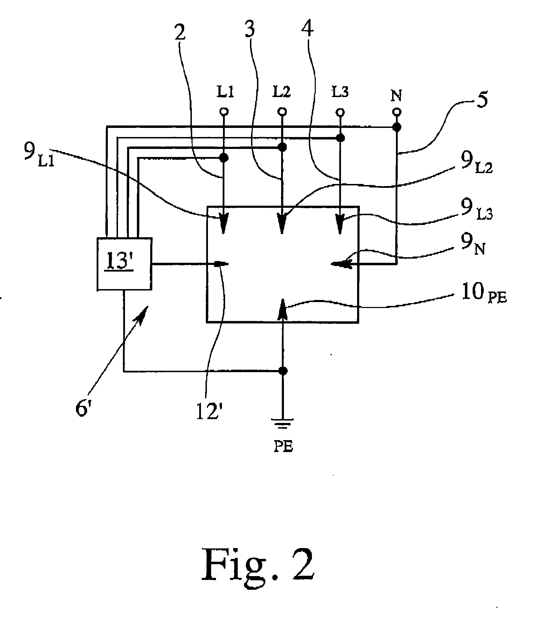

In den Fig. 1 und 2 bezeichnen L1, L2 und L3 die aktiven Phasenleiter eines Niederspannungsnetzes, sowie N den zugehörigen Neutralleiter. In jedem Leitungszweig 2, 3, 4 und 5 des Niederspannungsnetzes ist ein Überspannungsschutzelement 1 angeordnet.

Bei der "3+1-Schaltung" gemäß Fig, 1 a wird durch die jeweiligen Überspannungsschutzelemente 1 ein entsprechender Schutzpegel sowohl zwischen den einzelnen aktiven Phasenleitern L1, L2, L3 und dem Neutralleiter N als auch zwischen dem Neutralleiter N und dem Erdanschluß PE sichergestellt. Bei der "4 + 0-Schaltung" gemäß Fig. 1b ist der Schutzpegel durch die einzelnen Überspannungsschutzelemente 1 einerseits zwischen den einzelnen aktiven Phasenleitern L1, L2, L3 und dem Erdanschluß PE andererseits zwischen dem Neutralleiter N und dem Erdanschluß PE gewährleistet.

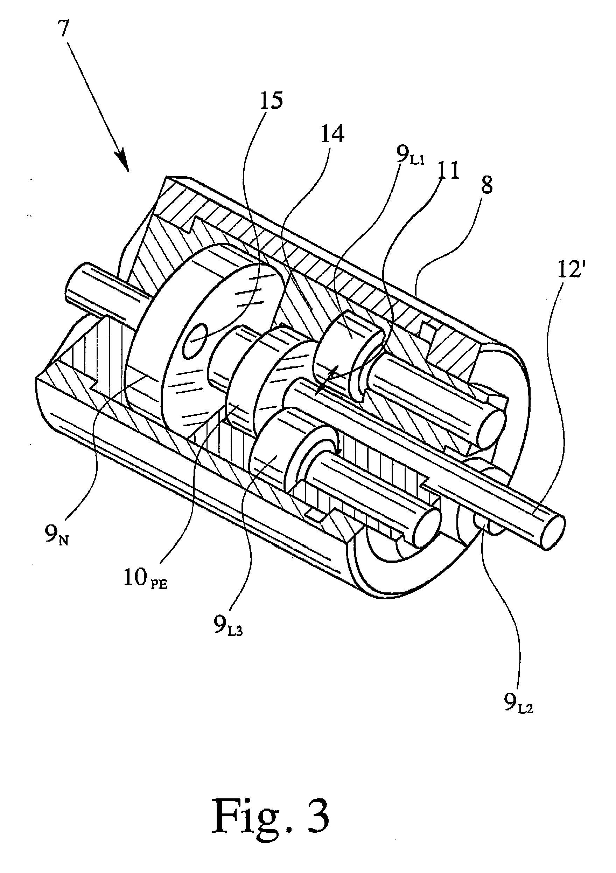

Bei dem in Fig. 2 dargestellten mehrpoligen Überspannungsschutzsystem bzw. bei dem in Fig. 3 dargestellten mehrpoligen Überspannungsschutzgerät 7, bei dem die einzelnen Überspannungsschutzelemente 1 in einem gemeinsamen Gehäuse 8 angeordnet sind, weisen die einzelnen Überspannungsschutzelemente 1 jeweils eine erste Elektrode 9, eine zweite Elektrode 10 und eine zwischen den beiden Elektroden 9, 10 existente bzw. wirksamen Luft-Durchschlag-Funkenstrecke 11 auf, Neben den - hier nur dargestellten - eine Luft-Durchschlag-Funkenstrecke 11 aufweisenden Überspazmungsschutzelementen 1 besteht grundsätzlich auch die Möglichkeit, Überspannungsschutzelemente mit einer Luft-Überschlag-Funkenstrecke, bei denen beim Ansprechen eine Gleitladung auftritt, zu verwenden. Aufgrund der größeren Stoßstromtragfähigkeit werden für die in Rede stehenden mehrpoligen Überspannungsschutzsysteme, die auch als Blitzstromableiter bezeichnet werden, bevorzugt Überspannungsschutzelemente 1 mit einer Luft-Durchschlag-Funkenstrecke 11 verwendet.

In Fig. 2 ist das Schaltbild eines verbesserten mehrpoligen Überspannungsschutzsystems dargestellt, bei dem eine zentrale Zündschaltung 13' und eine zentrale Zündelektrode 12' vorgesehen sind, so daß das mehrpolige Überspannungsschutzsystem auch insgesamt nur eine zentrale Zündhilfe 6' aufweist.

Anhand von Fig. 2 ist darüber hinaus ersichtlich, daß die einzelnen Überspannungsschutzelemente 1 zwar jeweils eine erste Elektrode 9_{L1}, 9_{L2}, 9_{L3} und 9_{N} aufweisen, die einzelnen Überspannungsschutzelemente jedoch nicht jeweils eine eigene zweite Elektrode aufweisen, sondern nur eine "gemeinsame" zweite Elektrode 10_{PE} vorgesehen ist. Somit wird z. B. die Luft-Durchschlag-Funkenstrecke 11 des Überspannungsschutzelements 1 des Leitungszweigs 2, d. h. des aktiven Phasenleiters L₁, durch die Elektrode 9_{L1} als erste Elektrode und die Elektrode 10_{PE} als zweite Elektrode gebildet.

In Fig. 3 ist eine konkrete Ausgestaltung eines mehrpoligen Überspannungsschutzsystems dargestellt, wobei die einzelnen Elektroden 9_{L1}, 9_{L2}, 9_{L3}, 9_{N} und 10_{PE} sowie die gemeinsame Zündelektrode 12' in einem Gehäuse 8 angeordnet sind, so daß insgesamt ein mehrpoliges Überspannungsschutzgerät 7 vorliegt. Die einzelnen Elektroden 9_{L1}, 9_{L2}, 9_{L3}, 9_{N} und 10_{PE} sowie die gemeinsamen Zündelektrode 12' sind dabei koaxial zueinander angeordnet und weisen jeweils einen kreisförmigen Querschnitt auf. Alternativ dazu können die einzelnen Elektroden 9_{L1}, 9_{L2}, 9_{L3}, 9_{N} und 10_{PE} sowie die gemeinsame Zündelektrode 12' auch einen ovalen oder rechteckigen Querschnitt aufweisen. Von besonderem Vorteil ist es dabei, wenn die einzelnen Elektroden 9_{L1}, 9_{L2}, 9_{L3}, 9_{N} und 10_{PE} sowie die gemeinsame Zündelektrode 12' über ihre Länge unterschiedliche Querschnitte aufweisen, so daß die Elektroden 9_{L1}, 9_{L2}, 9_{L3}, 9_{N} und 10_{PE} sowie die gemeinsame Zündelektrode 12' über ihre Lände im Querschnitt abgestuft sind, wodurch der Bereich, der als Luft-Durchschlag-Funkensfirecke 11 wirksam sein soll, in besonderer Weise örtlich vorgegeben werden kann.

Der Innenraum des Gehäuses 8, daß vorzugsweise druckdicht und druckfest ausgeführt ist, weist eine Auskleidung 14 auf, die insbesondere aus POM-Teflon besteht. Zur weiteren Verbesserung der Druckdichtigkeit des Gehäuses 8 kann dieses von einem - hier nicht dargestellten - äußeren Druckzylinder umschlossen sein. Schließlich ist in Fig. 3 noch dargestellt, daß in der Elektrode 9_{N} des Neutralleiters N ein Loch 15 ausgebildet ist. Durch dieses Loch 15 ist ein Druckausgleich innerhalb des Gehäuses 8 möglich, indem Plasma aus dem Bereich der Luft-Durchschlag-Funkenstrecken 11 - in Fig. 3 der Bereich rechts der Elektrode 9_{N} - in einen Bereich entweichen kann, - in Fig. 3 der Bereich links der Elektrode 9_{N} - in dem die Elektroden 9_{L1}, 9_{L2}, 9L₃, 9_{N} und 10_{PE} aufgrund ihres über ihre Länge abgestuften Querschnitts einen größeren Abstand voneinander haben.

## Patentansprüche

1. Mehrpoliges Überspannungsschutzsystem für ein mehrphasiges Stromversorgungsnetz, mit mindestens zwei Überspannungsschutzelementen (1), wobei in jedem Leitungszweig (2, 3, 4, 5) des Stromversorgungsnetzes ein Überspannungsschutzelement (1) angeordnet ist, wobei die einzelnen Überspannungsschutzelemente (1) eine erste Elektrode (9), eine zweite Elektrode (10) und eine zwischen den beiden Elektroden (9, 10) existente bzw. wirksame Luft-Durchschlag-Funkenstrecke (11) aufweisen, wobei alle Überspannungsschutzelemente (1) in einem gemeinsamen Gehäuse (8) angeordnet sind, und
wobei die einzelnen Überspannungsschutzelemente (1) derart miteinander gekoppelt sind, dass beim Zünden eines Überspannungsschutzelements (1) alle anderen Überspannungsschutzelemente (1) auch gezündet werden,
**dadurch gekennzeichnet,**
**dass** die Elektroden (9, 10) der einzelnen Überspannungsschutzelemente (1) so zueinander angeordnet sind, dass beim Zünden der Luft-Durchschlag-Funkenstrecke (11) eines Überspannungsschutzelements (1) durch das dann vorhandene Plasma die Luft-Durchschlag-Funkenstrecken (11) der anderen Überspannungsschutzelemente (1) ebenfalls zünden, und
**dass** die einzelnen Elektroden (9, 10) koaxial zueinander angeordnet sind.

2. Überspannungsschutzsystem nach Aspruch 1, **dadurch gekennzeichnet, dass** eine zentrale Zündhilfe (6) vorgesehen ist, mit der alle Überspannungsschutzelemente (1) verbunden sind.

3. Überspannungsschutzsystem nach Anspruch 2, **dadurch gekennzeichnet, dass** die zentrale Zündhilfe (6) durch eine zentrale Zündelektrode (12') und eine mit der Zündelektrode (12') verbundene zentrale Zündschaltung (13') gebildet ist.

4. Überspannungsschutzsystem nach Anspruch 1, **dadurch gekennzeichnet, dass** die einzelnen Elektroden (9, 10) und ggf. die Zündelektrode (12) über ihre Länge unterschiedliche Querschnitte aufweisen.

5. Überspannungsschutzsystem nach einem der Ansprüche 1 bis 4, **dadurch gekennzeichnet, dass** der Innenraum des die Elektroden (9, 10, 12) umgebenden Gehäuses (8) ausgekleidet ist, wobei die Auskleidung (14) insbesondere aus POM-Teflon besteht.

6. Überspannungsschutzsystem nach einem der Ansprüche 1 bis 5, **dadurch gekennzeichnet, dass** das die Elektroden (9, 10, 12) umgebenden Gehäuse (8) geschlossen sowie druckdicht und druckfest ausgeführt ist, insbesondere einen äußeren Druckzylinder aufweist.

## Claims

1. Multipole overvoltage protection system for a polyphase power supply system, having at least two overvoltage protection elements (1), with one overvoltage protection element (1) being arranged in each line branch (2, 3, 4, 5) of the power supply system, with the individual overvoltage protection elements (1) having a first electrode (9), a second electrode (10) and an air flashover spark gap (11), which exists and acts between the two electrodes (9, 10), with all the overvoltage protection elements (1) being arranged in a common housing (8), and
with the individual overvoltage protection elements (1) being coupled to one another such that, when one overvoltage protection element (1) is triggered, all the other overvoltage protection elements (1) are also triggered,
**characterized in**
**that** the electrodes (9, 10) of the individual overvoltage protection elements (1) are arranged with respect to one another such that, when the air-flashover spark gap (11) of one overvoltage protection element (1) is triggered, the plasma which is then present likewise triggers the air-flashover spark gaps (11) of the other overall voltage protection elements (1), and
in that the individual electrodes (9, 10) are arranged coaxially with respect to one another.

2. Overvoltage protection system according to Claim 1, **characterized in that** a central trigger aid (6) is provided, to which all the overvoltage protection elements (1) are connected.

3. Overvoltage protection system according to Claim 2, **characterized in that** the central trigger aid (6) is formed by a central trigger electrode (12') and a central trigger circuit (13'), which is connected to the trigger electrode (12').

4. Overvoltage protection system according to Claim 1, **characterized in that** the individual electrodes (9, 10) and, if appropriate, the trigger electrode (12) have different cross sections over their length.

5. Overvoltage protection system according to one of Claims 1 to 4, **characterized in that** the interior of the housing (8) which surrounds the electrodes (9, 10, 12) is clad, with the cladding (14) being composed, in particular, of POM Teflon.

6. Overvoltage protection system according to one of Claims 1 to 5, **characterized in that** the housing (8) which surrounds the electrodes (9, 10, 12) is designed to be closed as well as pressure-tight and pressure-resistant, and in particular has an outer pressure cylinder.

## Revendications

1. Système multipolaire de protection contre les surtensions destiné à un réseau d'alimentation en courant polyphasé, comprenant au moins deux éléments de protection contre les surtensions (1), dans lequel, dans chaque branche (2, 3, 4, 5) du réseau d'alimentation en courant est disposé un élément de protection contre les surtensions (1), les éléments de protection contre les surtensions (1) individuels comprenant une première électrode (9), une seconde électrode (10) et un éclateur à ventilation d'air (11) existante ou effective entre les deux électrodes (9, 10), dans lequel tous les éléments de protection contre les surtensions (1) sont disposés dans un boîtier commun (8), et
dans lequel les éléments de protection contre les surtensions individuels (1) sont couplés les uns aux autres de telle manière que lors de l'allumage d'un élément de protection contre les surtensions (1), tous les autres éléments de protection contre les surtensions (1) soient également allumés,
**caractérisé en ce**
**que** les électrodes (9, 10) des éléments de protection contre les surtensions individuels (1) sont agencés les uns par rapport aux autres de telle manière que lors de l'allumage de l'éclateur à circulation d'air (11) d'un élément de protection contre les surtensions (1), les éclateurs à circulation d'air (11) des autres éléments de protection contre les surtensions (1) s'allument également du fait du plasma ainsi présent, et
en ce que les électrodes individuelles (9, 10) sont disposées coaxialement les unes par rapport aux autres.

2. Système de protection contre les surtensions selon la revendication 1, **caractérisé en ce qu'**il est prévu un dispositif d'aide à l'allumage central (6) auquel sont connectés tous les éléments de protection contre les surtensions (1).

3. Système de protection contre les surtensions selon la revendication 2, **caractérisé en ce que** le dispositif d'aide à l'allumage central (6) est constitué d'une électrode d'allumage centrale (12') et d'un circuit d'allumage central (13') connecté à l'électrode d'allumage (12').

4. Système de protection contre les surtensions selon la revendication 1, **caractérisé en ce que** les électrodes individuelles (9, 10) et le cas échéant, l'électrode d'allumage (12) présentent suivant leur longueur des sections transversales différentes.

5. Système de protection contre les surtensions selon l'une quelconque des revendications 1 à 4, **caractérisé en ce que** l'espace intérieur du boîtier (8) entourant les électrodes (9, 10, 12) présentent un revêtement, le revêtement (14) étant notamment constitué de POM-Téflon.

6. Système de protection contre les surtensions selon l'une quelconque des revendications 1 à 5, **caractérisé en ce que** le boîtier (8) entourant les électrodes (9, 10, 12) est réalisé de manière à être fermé ainsi qu'étanche à la pression et résistant à la pression, et comprend notamment un cylindre de pression extérieur.
